# EUROPÄISCHE PATENTSCHRIFT

(11) **EP 3 433 135 B1**
(45) Veröffentlichungstag und Bekanntmachung des Hinweises auf die Patenterteilung: **24.02.2021**
(21) Anmeldenummer: 17730366.6
(22) Anmeldetag: 29.05.2017
(51) Int. Cl.: B60R 21/38

(54) **AUFSTELLBARES KLAPPENSCHARNIER**
LIFTING HINGE FOR BONNET
CHARNIÈRE D'ARTICULATION POUR CAPOT SOULEVABLE

(30) Priorität: 30.05.2016 DE 102016109937
(43) Veröffentlichungstag der Anmeldung: 30.01.2019
(73) Patentinhaber: Edscha Engineering GmbH, 42855 Remscheid (DE)
(72) Erfinder: ABELN, Peter, 42929 Wermelskirchen (DE); HERRMANN, Ralf, 42897 Remscheid (DE)
(74) Vertreter: Sparing, Rolf Klaus
(86) Internationale Anmeldenummer: PCT/DE2017/100454
(87) Internationale Veröffentlichungsnummer: WO 2017/206987

(56) Entgegenhaltungen:
- EP-A1- 2 364 886
- DE-A1-102008 058 186
- DE-A1-102014 212 223
- US-A- 4 223 943

## Beschreibung

Die Erfindung betrifft ein aufstellbares Klappenscharnier nach dem Oberbegriff des Anspruchs 1, insbesondere ein Klappenscharnier mit einer Aufstellkinematik zur Bereitstellung einer Fußgängerschutzfunktion für den Einsatz in einem Fußgängerschutzsystem eines Fahrzeugs.

Aus dem Stand der Technik sind Klappenscharniere bekannt, welche eine Aufstellkinematik bereitstellen, wobei das Klappenscharnier üblicherweise mittels eines Antriebselementes, welches meist schlagartig eine Kraft ausüben kann, in eine aufgestellte Position verlagert wird, um die Fronthaube im Falle eines Fußgängeraufpralles in eine gegenüber dem Motorblock angehobene Position zu bringen. Hierdurch wird die Verletzungsgefahr für den Fußgänger reduziert, da die Fronthaube im Vergleich zu dem sehr steifen Motorblock eine gewisse Verbiegung bei äußerer Krafteinwirkung erfährt und so den Aufprall des Fußgängers dämpft. Derartige Klappenscharniere sind dabei in nicht ausgelöstem Zustand des Fußgängerschutzsystems mit einer Verriegelungsanordnung derart verriegelbar, dass die Fronthaube immer noch zu entsprechenden Servicezwecken in der üblichen Weise geöffnet werden kann, ohne dass die vorgesehene Aufstellkinematik ausgelöst wird.

DE 10 2005 022 924 A1 zeigt ein aufstellbares Klappenscharnier zur Verwendung in einem Fußgängerschutzsystem, umfassend eine an der Fahrzeugklappe befestigbare, als Scharnierschenkel ausgebildete erste Befestigungseinheit, eine an einem Fahrzeugkarosserieteil befestigbare als Scharnierschenkel ausgebildete zweite Befestigungseinheit und eine die erste Befestigungseinheit mit der zweiten Befestigungseinheit gelenkig verbindende Gelenkanordnung. Die beiden Befestigungseinheiten sind dabei derart miteinander gelenkverbunden, dass über eine vorgesehene Aufstellanordnung die erste Befestigungseinheit gegenüber der zweiten Befestigungseinheit derart beabstandet wird, dass die Frontklappe angehoben wird. Das gezeigte aufstellbare Klappenscharnier umfasst weiter eine Verriegelungsanordnung, welches ein Riegelglied und eine Riegelfalle umfasst, wobei die Riegelfalle als Rastklinke ausgebildet ist, welche das als Rastnocken ausgebildete Riegelglied in der geschlossenen Stellung der Frontklappe untergreift. Nachteilig an dem gezeigten aufstellbaren Klappenscharnier ist, dass insbesondere bei Ausgestaltung der Gelenkanordnung als Mehrgelenk oder bei einer besonders langen Ausgestaltung der den jeweiligen Befestigungseinheiten zugeordneten Lenkern die Gefahr besteht, dass eine durch äußere Krafteinwirkung verursachte Auslösung des Fußgängerschutzes durch entsprechende Toleranzen bei der Fertigung begünstigt wird, da sich die relative Position der Riegelfalle zum Riegelglied verändern kann. Dabei wird der für eine sichere Verriegelung zweckmäßige Formschluss zwischen dem Riegelglied und der Riegelfalle im verriegelten Zustand nicht immer gewährleistet.

DE 20 2015 006 895 U1 zeigt ein aufstellbares Klappenscharnier mit einem einer Klappe zugeordneten ersten Befestigungsteil und einem einer Fahrzeugkarosserie zugeordneten zweiten Befestigungsteil. Die erste und zweite Befestigungsteile sind dabei über eine Gelenkanordnung gelenkig miteinander verbunden. Die Gelenkanordnung umfasst dabei zwei Lenker, welche untereinander und mit je einem einem Ende mit der ersten Befestigungseinheit bzw. der zweiten Befestigungseinheit gelenkig verbunden sind. Das Klappenscharnier umfasst weiter einen als pyrotechnische Kolben-Zylinder-Einheit ausgebildeten Aktuator, welcher das Klappenscharnier im Falle eines Fußgängeraufpralls in Richtung auf einen aufgestellten Zustand, in dem das erste Befestigungsteil zu dem zweiten Befestigungsteil weiter beabstandet ist, vorspannt. Das gezeigte Klappenscharnier umfasst zudem eine Verriegelungsanordnung, welche eine als Haken ausgebildete verschwenkbare Riegelfalle und ein an einem Ende eines der Lenker angeordnetes, als Kulissenstein ausgebildetes Riegelglied aufweist, wobei der Kulissenstein in einer in dem zweiten Befestigungsteil angeordneten Führungskulisse verlagerbar ist. Nachteilig an dem gezeigten Klappenscharnier ist, dass das Riegelglied und die das Riegelglied umgreifende, als Haken ausgebildete Riegelfalle gegenüber auftretenden Längentoleranzen der Lenker bzw. der Befestigungsteile bzw. ihrer Befestigung an den Fahrzeugteilen unflexibel sind und so die Gefahr einer unbeabsichtigten Entriegelung der Aufstellbewegung des ersten Befestigungsteils gegenüber dem zweiten Befestigungsteil erhöht ist.

DE 10 2009 041 418 A1 zeigt ein aufstellbares Klappenscharnier zum Anheben einer Fahrzeughaube in einer Unfallsituation, umfassend eine an einem von Fahrzeugklappe und Fahrzeugkarosserieteil befestigbare erste Befestigungseinheit, eine an dem anderen von Fahrzeugklappe und Fahrzeugkarosserieteil befestigbare zweite Befestigungseinheit und eine die erste Befestigungseinheit mit der zweiten Befestigungseinheit gelenkig verbindende Gelenkanordnung, welche eine Öffnung der Fronthaube zu Servicezwecken erlaubt. Weiter umfasst das gezeigte aufstellbare Klappenscharnier eine Aufstellanordnung, welche ein Mehrgelenk umfasst und in einer Unfallsituation ein Aufstellen der Fahrzeughaube erlaubt. Dabei weist die Aufstellanordnung eine Verriegelungsanordnung auf, welche die Aufstellanordnung lösbar verriegelt, wobei die Verriegelungsanordnung ein Riegelglied und eine Riegelfalle umfasst. Nachteilig an dem gezeigten aufstellbaren Klappenscharnier ist, dass die Aufstellanordnung mehrere Lenker umfasst, so dass bei der Herstellung der Lenker auftretende Längentoleranzen zu unbeabsichtigten Entriegelung der Aufstellanordnung führen können.

DE 103 43 077 A1 zeigt ein aufstellbares Klappenscharnier mit einer an einem von Fahrzeugklappe und Fahrzeugkarosserieteil befestigbare erste Befestigungseinheit und einer an dem anderen von Fahrzeugklappe und Fahrzeugkarosserieteil befestigbare zweite Befestigungseinheit. Die erste Befestigungseinheit und die zweite Befestigungseinheit sind dabei über eine einen Lenker und eine Kulissenanordnung umfassende Gelenksanordnung miteinander gelenkig verbunden, wobei zumindest eine von der ersten Befestigungseinheit und der zweiten Befestigungseinheit eine Aufstellanordnung umfasst. Die Aufstellanordnung, welche das Aufstellen des Klappenscharniers bewirkt, weist dabei eine Verriegelungsanordnung auf, die die Aufstellanordnung lösbar verriegelt. Die Verriegelungsanordnung umfasst dabei eine als Haken ausgebildete Riegelfalle, welche gelenkig zum einen mit einem Zwischenhebel, welcher wiederum gelenkig an der ersten Befestigungseinheit angeordnet ist, und zum anderen mit dem Lenker verbunden ist. Der Verriegelungshaken untergreift die erste Befestigungseinheit im verriegelten Zustand der Aufstellanordnung durch eine Öffnung hindurch und ist dabei über eine Vorspanneinrichtung in Verriegelungsrichtung vorgespannt. Dabei befindet sich ein Vorsprung des Zwischenhebels in Anlage mit einem Anschlag an der ersten Befestigungseinheit, sodass die erste Befestigungseinheit zwischen einer Nase des Verriegelungshakens und dem Vorsprung von der Vorspanneinrichtung vorgespannt festgelegt ist. Nachteilig an der gezeigten Aufstellanordnung ist jedoch, dass insbesondere der Verriegelungshaken eine rechtwinklige Innenkontur aufweist, welche mit der Unterseite der Befestigungseinheit in Eingriff steht, sodass entsprechende Toleranzen bei der Fertigung des Verriegelungshaken, des Lenkers und des Zwischenhebels dazu führen können, dass keine sichere Verriegelung mehr gegeben ist.

DE 10 2014 212 223 A1, die ein aufstellbares Klappenscharnier nach dem Oberbegriff des Anspruchs 1 offenbart, zeigt ein aufstellbares Klappenscharnier mit einer an einem von Fahrzeugklappe und Fahrzeugkarosserie Teil befestigbare erste Befestigungseinheit und einer an dem anderen von Fahrzeugklappe und Fahrzeugkarosserie Teil befestigbare zweite Befestigungseinheit. Weiter umfasst das klappen Scharnier eine die erste Befestigungseinheit mit der zweiten Befestigungseinheit gelenkig verbindende Gelenksanordnung, wobei zumindest eine von der ersten Befestigungseinheit und der zweiten Befestigungseinheit eine Ausstellanordnung umfasst, welche eine Verriegelungsanordnung aufweist, welche die Aufstellanordnung lösbar verriegelt. Die Verriegelungsanordnung umfasst ein Riegelglied und ein Riegelfalle, welche miteinander in Eingriff gebracht werden können, sodass eine Verriegelung der Aufstellanordnung erreicht wird.

US 4 223 943 A zeigt eine Verriegelungsanordnung für eine lösbare Fahrzeugdachklappe, umfassend zwei gegenüberliegende Riegelglieder, wobei die Riegelglieder in jeweilige Öffnungen in der Karosserie einführbar sind, um so die Position der Fahrzeugdachklappe relativ zu der Karosserie festzulegen. Die Riegelglieder sind dabei exzentrisch in einer Buchse angeordnet, sodass durch Drehen der Buchse eine Justierung der Riegelglieder relativ zu der Karosserie bzw. der Öffnungen in der Karosserie ermöglicht ist.

Es ist die Aufgabe der Erfindung, ein aufstellbares Klappenscharnier anzugeben, das eine Aufstellkinematik bereitstellt und dabei einen Ausgleich von Toleranzen ermöglicht.

Diese Aufgabe wird erfindungsgemäß durch ein aufstellbares Klappenscharnier mit den Merkmalen des unabhängigen Anspruchs gelöst.

Gemäß einem Aspekt der Erfindung wird ein aufstellbares Klappenscharnier angegeben, das eine an einem von Fahrzeugklappe und Fahrzeugkarosserieteil befestigbare erste Befestigungseinheit, eine an dem anderen von Fahrzeugklappe und Fahrzeugkarosserieteil befestigbare zweite Befestigungseinheit und eine die erste Befestigungseinheit mit der zweiten Befestigungseinheit gelenkig verbindende Gelenkanordnung umfasst. Dabei ist vorgesehen, dass zumindest eine von der ersten Befestigungseinheit und der zweiten Befestigungseinheit eine Aufstellanordnung umfasst, wobei die Aufstellanordnung eine Verriegelungsanordnung aufweist, die die Aufstellanordnung lösbar verriegelt. Die Verriegelungsanordnung umfasst dabei ein Riegelglied und eine Riegelfalle, wobei weiter vorgesehen ist, dass das Riegelglied einen Exzenter umfasst, wobei der Exzenter entlang eines Teils seines Umfanges von der Riegelfalle umgreifbar ist. Weiter ist vorgesehen, dass das Riegelglied einen Antriebsabschnitt umfasst, wobei an dem Antriebsabschnitt ein Antriebsmittel zur Drehung des Riegelgliedes lösbar koppelbar ist. Dabei weist der Antriebsabschnitt einen polygonförmigen Querschnitt auf. Alternativ hierzu ist vorgesehen, dass der Antriebsabschnitt einen ellipsoiden Querschnitt aufweist. Um eine sichere Verriegelung bzw. Entriegelung der Aufstellanordnung zu gewährleisten, ist vorgesehen, dass der Bereich des Umfanges des Riegelgliedes von der Riegelfalle so umgriffen wird bzw. an den die Riegelfalle im verriegelten Zustand der Aufstellanordnung so anliegt, dass eine formschlüssige Verbindung zwischen Riegelfalle und Riegelglied von durch äußere Kräfte verursachte Bewegungen der mit der Riegelfalle bzw. mit dem Riegelglied verbundenen Bauteile nicht gelöst wird. Zudem wird gewährleistet, dass bei einem Fußgängeraufprall die gezielte schnelle Entriegelung der Aufstellanordnung durch Verklemmen der Riegelfalle und des Riegelgliedes nicht erschwert oder sogar verhindert wird. Durch die Ausbildung eines Exzenters entlang der axialen Ausdehnung des Riegelgliedes wird vorteilhaft erreicht, dass während der Herstellung auftretende Toleranzen der Ausdehnung der in dem Klappenscharnier verbauten Bauteile, die mit der Verriegelungsanordnung in Wirkverbindung stehen, durch entsprechende Nachjustierung des Exzenters ausgeglichen werden können. Hierdurch wird verhindert, dass sich beispielsweise die Verriegelungsanordnung durch von außen wirkende Kräfte entriegelt und die Fronthaube durch das über die entriegelte Aufstellanordnung erlangte Spiel gegenüber der Fahrzeugkarosserie beweglich ist. Der Antriebsabschnitt ist in vorteilhafter Weise derart gestaltet, dass das Antriebsmittel bevorzugt ein präzises Einstellen des mit dem Antriebsabschnitt verbundenen Riegelgliedes über eine formschlüssige Verbindung mit dem Antriebsabschnitt erlaubt.

In einer zweckmäßigen Ausgestaltung ist das Riegelglied drehbar um eine Achse ausgebildet. Dabei ist vorteilhaft vorgesehen, dass die Achse, um welche das Riegelglied drehbar ist, parallel zu der axialen Erstreckung des Exzenters verläuft. Hierdurch wird vorteilhaft eine Justierung des durch die Riegelfalle umgriffenen Bereiches des Exzenters bereitgestellt. Wird nach der Montage des Klappenscharniers festgestellt, dass die Riegelfalle das Riegelglied nicht sicher genug umgreift, so dass eine unbeabsichtigte Entkopplung von Riegelfalle und Riegelglied möglich ist, kann der Exzenter entsprechend so gedreht werden, bis die Riegelfalle und das Riegelglied miteinander bezüglich durch äußere Kräfte verursachte Bewegungen so gekoppelt sind. Somit kann eine Justierung sehr einfach erfolgen, ohne das die Notwendigkeit besteht, das Klappenscharnier wieder zu demontieren und die Bauteile nachzubearbeiten. Dabei ist vorgesehen, dass das Riegelglied bzw. der Exzenter nach der entsprechenden Nachjustierung durch beispielsweise Vernieten drehfest angeordnet ist. Hierdurch wird verhindert, dass die nach der Montage vorgenommene Orientierung des Exzenters sich während der Nutzung des Fahrzeuges durch beispielsweise Vibrationen während der Fahrt wieder verstellt. Zudem wird vorteilhaft eine Einstellbarkeit der die erste Befestigungseinheit und die zweite Befestigungseinheit gelenkig verbindenden Gelenkanordnung bereitgestellt, da die Aufstellanordnung über die Fahrzeugklappe mit der Karosserie verbunden ist.

Besonders bevorzugt handelt es sich bei dem Querschnitt des Antriebsabschnittes um einen Sechskant, welcher besonders vorteilhaft über übliche entsprechend passend ausgebildete Schraubschlüssel drehbar ist. Da entsprechende polygonförmige Schraubschlüssel genormt sind, wird eine besonders kostengünstige Justierungsmöglichkeit des Riegelgliedes ermöglicht, da keine gesondert gefertigten Werkzeuge bzw. Antriebsmittel für die Justierung des Exzenters nötig sind.

Zweckmäßigerweise ist vorgesehen, dass der Antriebsabschnitt einen stirnseitigen Endabschnitt des Riegelgliedes bildet. Vorteilhaft wird dadurch gewährleistet, dass der Antriebsabschnitt stirnseitig durch ein entsprechendes Antriebsmittel antreibbar ist, wobei vorteilhaft der Antriebsabschnitt von außen gut erreichbar ist. Dabei kann es zweckmäßigerweise vorgesehen sein, dass der Antriebsabschnitt und der Abschnitt des Riegelgliedes, welcher den Exzenter umfasst bzw. ausbildet, durch einen Zwischenabschnitt axial voneinander beabstandet sind. Der Zwischenabschnitt ist dabei bevorzugt als ein konzentrisch zu der Drehachse, um welche des Riegelglied drehbar ist, umlaufender Kreiszylinder ausgebildet. Dabei weist der als Kreiszylinder ausgebildete Zwischenabschnitt und der Antriebsabschnitt zumindest abschnittsweise bevorzugt einen kleineren Außenradius als der Exzenter auf. Hierdurch bildet die Stirnseite des Exzenters zumindest abschnittsweise eine Anschlagfläche zur axialen Begrenzung des Eingriffsbereiches des Antriebsmittels mit dem Riegelglied. Insbesondere wird verhindert, dass das Antriebsmittel mit dem Außenumfang des Exzenters in Berührung kommt, und die äußere Oberfläche des Exzenters beschädigt.

Vorteilhaft ist vorgesehen, dass die eine, die Aufstellanordnung umfassende Befestigungseinheit ein Befestigungsteil umfasst, dass an einem von Fahrzeugklappe und Fahrzeugkarosserieteil befestigbar ist. Das Befestigungsteil ist dabei bevorzugt als ein formstabiles Blechteil aus beispielsweise Aluminium ausgebildet. Das Befestigungsteil weist dabei mehrere Befestigungselemente auf, die entsprechende Befestigungsmittel aufnehmen können, um das Befestigungsteil mit der Fahrzeugklappe bzw. dem Fahrzeugkarosserieteil zu verbinden. Die entsprechenden Befestigungselemente sind dabei zweckmäßigerweise als Bohrungen oder entsprechende Aussparungen ausgebildet, in welchen entsprechende Befestigungsmittel wie Schrauben oder Nietbolzen aufgenommen werden können, um die Fahrzeugklappe bzw. das Fahrzeugkarosserieteil an dem Befestigungsteil zu befestigen.

In einer bevorzugten Weiterbildung ist vorgesehen, dass die eine, die Aufstellanordnung umfassende Befestigungseinheit ein Basisteil umfasst, das mit der Gelenkanordnung verbunden ist. Das Basisteil kann dabei als gestanztes flaches Blechteil ausgebildet sein, welches an einer Stelle einen Verbindungsabschnitt aufweist, in welchem Verbindungsmittel befestigbar sind, um das Basisteil mit der Gelenkanordnung zu verbinden.

In einer bevorzugten Ausgestaltung ist vorgesehen, dass die Aufstellanordnung ein Eingelenk umfasst, das das Befestigungsteil und das Basisteil gelenkig miteinander verbindet. Das Eingelenk kann dabei besonders zweckmäßig durch einen einfachen Gelenkbolzen gebildet sein, welcher in entsprechenden Aussparungen in dem Befestigungsteil und dem Basisteil aufgenommen ist. Dabei kann in einer Weiterbildung auch vorgesehen sein, dass das Eingelenk eine Lagerbuchse umfasst, welche in zumindest einer der Aussparungen des Befestigungsteils und des Basisteils aufgenommen ist. Hierdurch werden Beschädigungen des Befestigungsteils und des Basisteils in dem Bereich des Eingelenks vermieden, da die während der Verschwenkung der Fahrzeugklappe auftretenden Kräfte durch die Lagerbuchse aufgenommen werden.

Alternativ kann die Aufstellanordnung auch ein Mehrgelenk umfassen, wobei das Mehrgelenk das Befestigungsteil und das Basisteil gelenkig miteinander verbindet. Das Mehrgelenk kann dabei beispielsweise als Viergelenk ausgebildet sein, so dass eine Aufstellbewegung durch entsprechende Verschwenkung der, das Viergelenk bildenden Lenker ermöglicht wird. Alternativ hierzu kann auch vorgesehen sein, dass das Mehrgelenk als Dreigelenk ausgebildet ist, wobei ein viertes Gelenk beispielsweise durch Kombination eines Kulissensteins mit einer Führungskulisse ersetzt werden kann.

In einer besonders bevorzugten Ausbildung ist für den Fall, dass die Aufstellanordnung ein Eingelenk umfasst, das das Befestigungsteil und das Basisteil gelenkig miteinander verbindet, vorgesehen, dass die Aufstellanordnung eine Führungskulisse und einen in der Führungskulisse verlagerbaren Kulissenstein umfasst. Vorteilhaft kann so das das Befestigungsteil und das Basisteil gelenkig miteinander verbindende Eingelenk eine Aufstellbewegung der Aufstellanordnung definieren, wobei die Führungskulisse für den in der Führungskulisse verlagerbaren Kulissenstein einen Anschlag bildet, welcher die Aufstellbewegung definiert und zwischen zwei Endpositionen begrenzt. Hierbei ist die Führungskulisse zweckmäßigerweise in einem von Befestigungsteil und Basisteil angeordnet. Um eine entsprechend definierte Aufstellbewegung des Befestigungsteils gegenüber dem Basisteil zu ermöglichen, ist zudem vorgesehen, dass der Kulissenstein an dem anderen von Befestigungsteil und Basisteil angeordnet ist. Hierdurch wird vorteilhaft eine besonders definierte Bewegung des Befestigungsteiles gegenüber dem Basisteil ermöglicht.

Vorzugsweise ist vorgesehen, dass eines von Basisteil und der anderen Befestigungseinheit einen Anschlag umfasst. Der an einem von Basisteil und der anderen Befestigungseinheit vorgesehene Anschlag dient hierbei dazu, den Öffnungswinkel bei der Verschwenkung der Fahrzeugklappe zwischen der geschlossenen Position und der geöffneten Position, in die der Motorblock von außen zugänglich ist, zu begrenzen.

Zweckmäßigerweise ist das Riegelglied an einem von Befestigungsteil und dem Basisteil angeordnet. Das Riegelglied ist dabei zweckmäßigerweise fest mit einem von dem Befestigungsteil und dem Basisteil verbunden, so dass eine formschlüssige Verriegelung der Aufstellanordnung ermöglicht ist. Alternativ hierzu kann auch vorgesehen sein, dass das Riegelglied an einem gegenüber dem Basisteil beweglichen Teil der Aufstellanordnung fest angeordnet ist. Bevorzugt ist dabei vorgesehen, dass die Riegelfalle verschwenkbar an dem anderen von Befestigungsteil und dem Basisteil angeordnet ist. Hierdurch wird für den Fall, dass die Riegelfalle das Riegelglied zumindest abschnittsweise formschlüssig umgreift, eine sichere Verriegelung der Aufstellanordnung gewährleistet.

In einer Weiterbildung wird die eine, die Aufstellanordnung umfassende Befestigungseinheit bei einer Aufstellbewegung des Befestigungsteils gegenüber dem Basisteil, gegenüber der anderen Befestigungseinheit über die Gelenkanordnung verschwenkt. Vorteilhaft kann so eine Aufstellbewegung der Fahrzeugklappe gegenüber der Fahrzeugkarosserie durch eine Verschwenkung der ersten Befestigungseinheit gegenüber der zweiten Befestigungseinheit erfolgen, falls zuvor die Verriegelung der Aufstellanordnung erfolgt ist.

In einer zweckmäßigen Weiterbildung ist vorgesehen, dass die Riegelfalle als Haken ausgebildet ist und dass das Riegelglied als durch den Haken umgreifbarer Bolzen ausgebildet ist. Der Bolzen weist dabei bevorzugt außerhalb des Exzenterabschnitts bzw. des Antriebsabschnittes eine kreiszylinderförmigen Außenfläche auf, so dass die Herstellung des Riegelglieds besonders einfach ist und zugleich eine Drehbarkeit des Bolzens gewährleistet ist. Damit einhergehend ist die Ausbildung der Riegelfalle als Haken besonders vorteilhaft, da eine sowohl einfache als auch gleichzeitig sichere formschlüssige Verriegelung der Aufstellanordnung möglich ist. Bevorzugt ist die Riegelfalle durch ein Federglied in Verriegelungsrichtung vorgespannt. Dabei ist das Federglied besonders zweckmäßig als Schenkelfeder ausgebildet, da diese über entsprechende Auswahl der jeweiligen Schenkellängen eine Einstellbarkeit der Vorspannungskraft ermöglicht.

In einer zweckmäßigen Weiterbildung ist die die erste Befestigungseinheit mit der zweiten Befestigungseinheit gelenkig verbindende Gelenkanordnung als Eingelenk ausgebildet. Hierdurch wird vorteilhaft in einer besonders einfachen Weise die Möglichkeit geschaffen, die Fronthaube von einer geschlossenen Endposition hin zu einer geöffneten Position zu verschwenken. Die Gelenkanordnung ist dabei vorteilhaft unabhängig von der Aufstellbewegung der Aufstellanordnung betätigbar, so dass unabhängig von einer Auslösung des Fußgängerschutzsystems eine Öffnung der Fronthaube zu Servicezwecken möglich ist.

In einer alternativen Ausgestaltung ist die die erste Befestigungseinheit mit der zweiten Befestigungseinheit gelenkig verbindende Gelenkanordnung als Mehrgelenk ausgebildet. Die Gelenkanordnung kann dabei beispielsweise als Viergelenk ausgebildet sein, wodurch neben einer reinen Schwenkbewegung der Fronthaube auch eine vertikale Beabstandung von Fronthaube und Motorblock ermöglicht wird. In diesem Fall sind zwei Lenker vorgesehen, die jeweils mit einem ersten Ende an der ersten Befestigungseinheit und mit einem zweiten Ende an der zweiten Befestigungseinheit gelenkig angeschlossen sind.

In einer zweckmäßigen Weiterbildung ist vorgesehen, dass die Riegelfalle einen Fortsatz umfasst. Für den Fall, dass die Riegelfalle als Haken ausgebildet ist, der um eine Schwenkachse herum verschwenkbar ist, so ist der Fortsatz der Abschnitt des Hakens bzw. der Riegelfalle, der durch die Schwenkachse von dem Abschnitt der Riegelfalle, welcher das Riegelglied abschnittsweise umgreift, abgegrenzt ist. Der Fortsatz dient dabei dazu, eine Verschwenkbewegung der Riegelfalle gegen die Verriegelungsrichtung zu ermöglichen. Dabei kann der Fortsatz als ein Angriffspunkt für eine äußere Kraft dienen, so dass eine entsprechende Auslösungsanordnung die Riegelfalle entgegen der Verriegelungsrichtung bzw. der Vorspannungskraft des an dem Riegelglied angreifenden Federgliedes verlagern und zeitlich nachfolgend eine Aufstellbewegung der Aufstellanordnung bewirken kann.

In einer bevorzugten Weiterbildung ist an dem Fortsatz ein Anschlag angeordnet, der mit der Riegelfalle verlagerbar bzw. verschwenkbar ist. Der bevorzugt als Anschlagplatte ausgebildete Anschlag kann dabei als ein von der Seitenfläche der Riegelfalle abstehender Bereich ausgebildet sein, wobei die Anschlagplatte durch einfaches Umformen des die Riegelfalle bildenden Werkstückes bzw. Blechbiegeteils hergestellt werden kann. Die Anschlagplatte kann dabei jedoch auch als ein formschlüssig oder stoffschlüssig mit der Riegelfalle, insbesondere mit dem Fortsatz verbundenes Blechteil ausgebildet oder verbunden sein. Die Verbindung zwischen der Anschlagplatte und der Riegelfalle bzw. dem Fortsatz ist dabei in jedem Fall so stabil, dass bei einem Anschlagen gegen ein anderes Bauteil des Klappenscharniers ein Ablösen der Anschlagplatte verhindert wird.

Zweckmäßigerweise ist eine Auslösungsanordnung vorgesehen, welche die Kopplung zwischen Riegelglied und Riegelfalle löst. Vorteilhaft kann so für den Fall eines über Detektoren festgestellten Fußgängeraufpralls eine automatische Entriegelung der Aufstellanordnung erfolgen. Zweckmäßigerweise umfasst die Auslösungsanordnung dabei einen Aktuator, welcher die Riegelfalle bei Auslösung der Auslösungsanordnung entgegen der Verriegelungsrichtung verlagert. Besonders bevorzugt ist dabei der Aktuator als Linearaktor ausgebildet, so dass die Entriegelung der Aufstellanordnung besonders schnell und effizient erfolgt.

In einer besonders bevorzugten Ausgestaltung ist vorgesehen, dass der Aktuator als pyrotechnische Kolben-Zylinder-Einheit ausgebildet ist. Pyrotechnische Kolben-Zylinder-Einheiten haben dabei besonders vorteilhaft die Eigenschaft, dass diese besonders schnell eine Kraft bereitstellen können, wodurch bei einem Fußgängerschutzsystem gewährleistet wird, dass sowohl die Entriegelung als auch die nachfolgende Aufstellbewegung der Fronthaube in die Fußgängerschutzposition besonders schnell erfolgt.

In einer bevorzugten Ausgestaltung ist vorgesehen, dass der Aktuator nach dem Auslösen der Auslösungsanordnung eine Kraft auf den Fortsatz überträgt, so dass der Aktuator bzw. die durch den Aktuator ausgeübte Kraft die Riegelfalle gegen die Verriegelungsrichtung verlagert, vorzugsweise verschwenkt und dann die Riegelfalle gemeinsam mit dem die Riegelfalle aufweisenden Teil verlagert. Zweckmäßigerweise ist hierzu vorgesehen, dass der Aktuator nach dem Auslösen der Auslösungsanordnung und der Entriegelung der Aufstellanordnung, die Aufstellanordnung zu einer aufgestellten Position hin kraftbeaufschlagt. Hierbei wird vorteilhaft erreicht, dass mit nur einem Aktuator sowohl die Verriegelung gelöst als auch die folgende Aufstellbewegung der Aufstellanordnung ermöglicht bzw. bewirkt wird. Hierdurch wird weiter vorteilhaft erreicht, dass die Aufstellbewegung im Wesentlichen sofort nach dem Verlagern der Verriegelungsanordnung entgegen der Verriegelungsrichtung erfolgt. Ebenso ergibt sich hieraus vorteilhaft, dass das Klappenscharnier besonders kompakt und platzsparend ausgebildet ist.

In einer zweckmäßigen Weiterbildung ist vorgesehen, dass eine die Aufstellbewegung der Aufstellanordnung dämpfende Dämpfungseinrichtung mit einem Dämpfungselement vorgesehen ist. Vorteilhaft wird so die Beschädigung der mit der Aufstellanordnung verbundenen Bauteile verhindert, da die Dämpfungseinrichtung die schlagartige Bewegung der jeweiligen Teile untereinander abbremst. Dabei ist vorteilhaft vorgesehen, dass das Dämpfungselement biegsam ausgebildet ist. Alternativ hierzu kann das Dämpfungselement aber auch durch ein Federelement gebildet werden, welches beispielsweise einen starren Arm in den Verlagerungsweg der über die Aufstellanordnung bewegten Teile gegen die Verriegelungsrichtung vorspannt.

In einer günstigen Weiterbildung ist vorgesehen, dass das Dämpfungselement an dem die Führungskulisse aufweisenden Befestigungsteil oder Basisteil angeordnet ist, wobei das Dämpfungselement einen Abschnitt des Verlagerungsweges des Kulissensteins, welcher an dem anderen von Befestigungsteil und Basisteil fest angeordnet ist, überlagert. In diesem Fall wird die Dämpfung dadurch erreicht, dass der Kulissenstein während der Aufstellbewegung gegen das Dämpfungselement verlagert wird und dieses unter der äußeren durch den Aktuator ausgeübten Kraft verbogen wird. Für den Fall, dass das Dämpfungselement als ein durch eine Feder vorgespannten Arm ausgebildet ist, wird dieser Arm durch den Kontakt mit dem sich verlagernden Kulissenstein entsprechend verschwenkt, wobei der Kulissenstein gegen die Federkraft verlagert wird und so die Aufstellbewegung der Aufstellanordnung gebremst bzw. gedämpft wird.

Weitere Vorteile, Eigenschaften und Weiterbildungen der Erfindung ergeben sich aus der nachstehenden Beschreibung eines bevorzugten Ausführungsbeispiels sowie aus den abhängigen Ansprüchen.

Die Erfindung wird nachstehend unter Bezugnahme auf die anliegenden Zeichnungen anhand eines bevorzugten Ausführungsbeispiels der Erfindung näher erläutert.
- Fig. 1: zeigt eine perspektivische Ansicht eines bevorzugten Ausführungsbeispiels eines erfindungsgemäßen aufstellbaren Klappenscharniers in nicht aufgestelltem Zustand.
- Fig. 2: zeigt eine gegenüber Fig. 1 gedrehte perspektivische Ansicht des Klappenscharniers aus Fig. 1.
- Fig. 3: zeigt eine perspektivische Ansicht des aufstellbaren Klappenscharnier aus Fig. 1 und 2 in einer aufgestellten Fußgängerschutzposition.
- Fig. 4: zeigt eine perspektivische Ansicht des Riegelglieds des Klappenscharniers aus Fig. 1 bis 3.

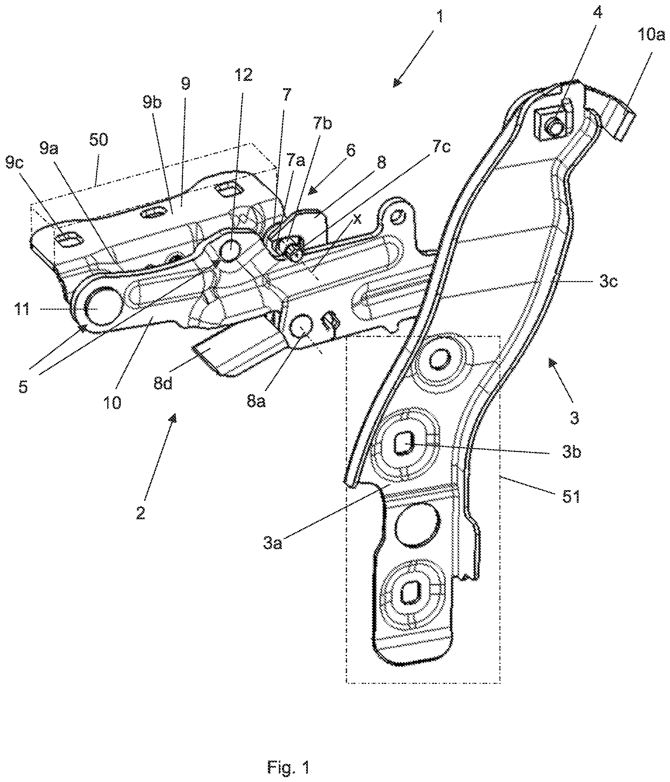

In Fig. 1 ist ein aufstellbares Klappenscharnier 1 in nicht aufgestelltem und verriegeltem Zustand gezeigt. Das aufstellbare Klappenscharnier umfasst dabei eine erste Befestigungseinheit 2, eine zweite Befestigungseinheit 3 und eine die erste Befestigungseinheit 2 und die zweite Befestigungseinheit 3 gelenkig verbindende Gelenkanordnung 4.

Die erste Befestigungseinheit 2 umfasst neben einem Befestigungsteil 9 ein als Biegeblechteil ausgebildetes Basisteil 10. Dabei sind das Befestigungsteil 9 und das Basisteil 10 über ein Eingelenk 11, welches Bestandteil einer Aufstellanordnung 5 ist, gelenkig miteinander verbunden.

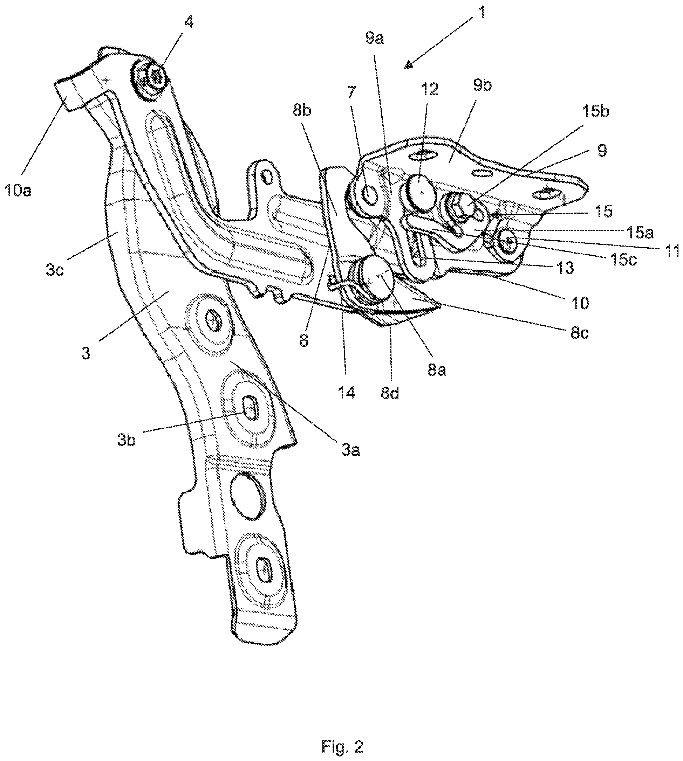

Das Befestigungsteil 9 weist dabei einen Gelenkabschnitt 9a und einen Befestigungsabschnitt 9b auf. An dem Befestigungsabschnitt 9b ist eine, hier strichpunktiert angedeutete Fahrzeugklappe 50 befestigt. Das Befestigungsteil 9 bzw. der Gelenkabschnitt 9a und der Befestigungsabschnitt 9b werden dabei durch ein einstückiges Blechbiegeteil gebildet, wobei der Gelenkabschnitt 9a und der Befestigungsabschnitt 9b etwa einen Winkel von 90° untereinander aufweisen. In dem Befestigungsabschnitt 9b sind entsprechende Aussparungen 9c vorgesehen, durch weiche passend gewählte, hier nicht dargestellte Befestigungsmittel hindurchgeführt werden können, um die Fahrzeugklappe 50 an dem Befestigungsabschnitt 9b des Befestigungsteils 9 zu befestigen. Die in Fig. 2 näher erläuterte Aufstellanordnung 5 dient dazu, innerhalb der ersten Befestigungseinheit 2 eine Aufstellbewegung der mit der ersten Befestigungseinheit 2 verbundenen Frontklappe 50 zu gewährleisten.

Das Basisteil 10 ist über die als Eingelenk ausgebildete Gelenkanordnung 4 gelenkig mit der zweiten Befestigungseinheit 3 verbunden, wobei die zweite Befestigungseinheit 3 fest an einem strichpunktiert angedeuteten Fahrzeugkarosserieteil 51 befestigbar ist. In dem in Fig. 1 gezeigten Ausführungsbeispiel ist die zweite Befestigungseinheit 3 als Blechbiegeteil ausgebildet, wobei das Blechbiegeteil einen Befestigungsbereich 3a aufweist, in welchem mehrere Befestigungsaussparungen 3b vorgesehen sind, die zur Befestigung der zweiten Befestigungseinheit 3 an dem Fahrzeugkarosserieteil 51 dienen. Der Befestigungsbereich 3a wird durch die Seitenflächen 3c, welche durch etwa rechtwinklig abgebogene Randbereiche der als Biegeblechteil ausgebildeten zweiten Befestigungseinheit 3 gebildet werden, begrenzt.

Wie in Fig. 1 zu erkennen, weist das Basisteil 10 einen Anschlag 10a auf, welcher durch einen in etwa um 90° abgebogenen Endbereich des Basisteils 10 gebildet wird. Der Anschlag 10a ist dabei in der Nähe des als Eingelenk ausgebildeten Gelenks 4 angeordnet, wodurch bei einer Verschwenkung der Fronthaube in einem geöffneten Zustand ein Öffnungswinkel der Verschwenkung dadurch begrenzt wird, dass der Anschlag 10a gegen die Seitenfläche 3c der zweiten Befestigungseinheit 3 schlägt.

Die erste Befestigungseinheit 2 umfasst weiter eine Verriegelungsanordnung 6, welche zur Verriegelung der Aufstellanordnung 5 dient und ein Riegelglied 7 und ein das Riegelglied 7 in verriegeltem Zustand umgreifende Riegelfalle 8 umfasst. Das Riegelglied 7 steht dabei senkrecht zu dem Gelenkabschnitt 9a des Befestigungsteils 9 ab und ist dabei als ein im Wesentlichen bolzenförmiges Bauteil ausgebildet, wobei das Riegelglied 7 in dem Bereich, in dem die Riegelfalle 8 das Riegelglied 7 zumindest abschnittsweise umgreift, einen Exzenter 7a aufweist. Das Riegelglied 7 weist weiter einen an den Exzenter 7a angrenzenden Zwischenabschnitt 7b auf, der als Kreiszylinder ausgebildet ist, der sich in axialer Richtung konzentrisch zu einer Drehachse x, um welche das Riegelglied drehbar ist, erstreckt. An das dem Exzenter 7a abgewandten Ende des Zwischenabschnitt 7b angrenzend ist schließlich ein stirnseitig angeordneter Antriebsabschnitt 7c vorgesehen, welcher in dem hier gezeigten Ausführungsbeispiel als Sechskant ausgebildet ist. Das Riegelglied 7 erstreckt sich dabei in axialer Richtung entlang der Drehachse x, um welche das Riegelglied mittels eines an den Antriebsabschnitt 7c angreifenden, hier nicht dargestellten Antriebsmittels gedreht werden kann, wobei der Exzenter 7a sich entsprechend ebenfalls um die Drehachse x mitdreht.

Die Riegelfalle 8 ist als Haken ausgebildet und um die Achse 8a schwenkbar an dem Basisteil 10 angeordnet, wobei die Achse 8a im Wesentlichen parallel zu der Drehachse x verläuft, um welche das Riegelglied 7 drehbar ist. An dem Basisteil 10 ist weiter ein in Fig. 2 gezeigter Kulissenstein 12 angeordnet, welcher ebenfalls Bestandteil der Aufstellanordnung 5 ist.

Fig. 2 zeigt das Ausführungsbeispiel eines aufstellbaren Klappenscharniers 1 aus Fig. 1 aus einer gegenüber Fig. 1 gedrehten perspektivischen Ansicht. In Fig. 2 ist zu erkennen, dass die als Haken ausgebildete Riegelfalle 8 über ein als Schenkelfeder ausgebildetes Federglied 14 in Verriegelungsrichtung derart vorgespannt ist, dass der Haken 8 das an dem Befestigungsteil 9 angeordnete Riegelglied 7 zumindest abschnittsweise umgreift. Die Riegelfalle 8 ist dabei um die Achse 8a schwenkbar angeordnet, wobei die Achse 8a die Riegelfalle 8 in einen Riegelabschnitt 8b, welcher abschnittsweise das Riegelglied 7 umgreift, und einen Fortsatz 8c unterteilt. An dem Fortsatz 8c ist dabei eine Anschlagplatte 8d vorgesehen, welche eine in Fig. 1 gezeigte im Wesentlichen flache Oberseite aufweist, welche bei Verlagerung der Riegelfalle 8 gegen die Verriegelungsrichtung gegen die Unterseite des Basisteils 10 anschlägt. Die Verschwenkung der Riegelfalle 8 kann dabei durch Krafteinwirkung eines hier nicht gezeigten Aktuators erfolgen, welcher an der Unterseite des Fortsatzes 8c bzw. der Anschlagplatte 8d angreift.

Wie in Fig. 2 zu sehen, weist das Befestigungsteil 9 in dem Gelenkabschnitt 9a eine Führungskulisse 13 auf, entlang welcher der fest mit dem Basisteil 10 verbundene Kulissenstein 12 bei einer Verschwenkung des Befestigungsteils 9 gegenüber dem Basisteil 10 verlagert wird. Die Führungskulisse 13 ist dabei als Schlitzkulisse ausgebildet, wobei der Schlitzverlauf so gewählt ist, dass der Kulissenstein 12 die Führungskulisse 13 bei der Verschwenkung des Befestigungsteils 9 um die durch das Eingelenk 11 definierte Drehachse durchfahren kann. Der Kulissenstein 12, die Führungskulisse 13 und das Eingelenk 11 bilden dabei gemeinsam die Aufstellanordnung 5, welche eine Aufstellkinematik der Fahrzeugklappe 50 bereitstellt. Dabei ist eine Dämpfungseinrichtung 15 vorgesehen, welche ein Dämpfungselement 15a umfasst, welches über ein Befestigungsmittel 15b fest mit dem Befestigungsteil 9 verbunden ist. Das Befestigungsmittel 15b ist in dem hier gezeigten Ausführungsbeispiel als Schraube ausgebildet. Das Dämpfungselement 15a ist hierdurch drehfest mit dem Befestigungsteil 9 verbunden. Das Dämpfungselement 15a ist dabei als ein Blechteil ausgebildet, welches einen Arm 15c umfasst, wobei der Arm 15c biegsam ausgebildet ist und den Verlagerungsweg des Kulissensteins 12 in der Führungskulisse 13 überkreuzt bzw. einen Abschnitt der Führungskulisse 13 überdeckt. Bei einer Aufstellbewegung wird dabei durch eine Verschwenkung des Befestigungsteiles 9 um die durch das Eingelenk 11 definierte Drehachse erreicht, dass der Arm 15c mit dem Befestigungsteil 9 in Richtung auf den Kulissenstein 12 verschwenkt wird und dabei durch den Kulissenstein 12 verbogen und die Aufstellbewegung hierdurch gedämpft wird.

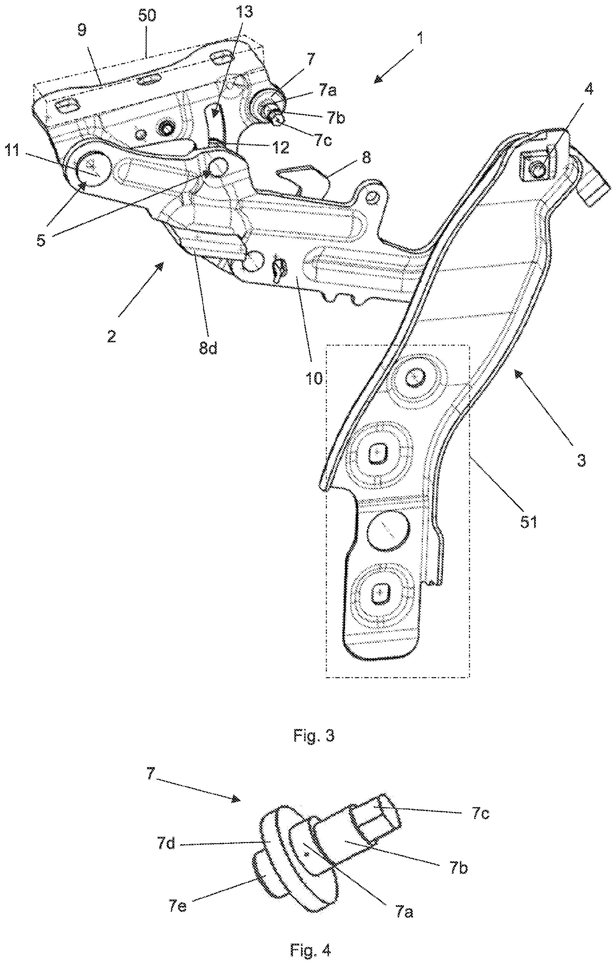

Fig. 3 zeigt das Ausführungsbeispiel eines erfindungsgemäßen aufstellbaren Klappenscharniers 1 aus Fig. 1 in einer aufgestellten Fußgängerschutzposition. Das Klappenscharnier in der hier gezeigten Position entspricht dem Zustand nachdem die Auslöseanordnung durch einen Fußgängeraufprall ausgelöst wurde und der Aktuator die Anschlagplatte 8d der Riegelfalle 8 kraftbeaufschlagt hat bzw. noch kraftbeaufschlagt. Wie in Fig. 3 zu erkennen, wurde durch die Krafteinwirkung des Aktuators die Anschlagplatte 8d bzw. der Fortsatz 8c der Riegelfalle 8 in Richtung auf das Basisteil 10 verschwenkt, wobei die Anschlagplatte 8d gegen die Unterseite des Basisteiles 10 anschlägt. Hierdurch wurden zum einen die Aufstellbewegung entriegelt und, da der Aktuator weiter eine Kraft auf die Anschlagplatte 8d ausgeübt hat, das Basisteil 10 um die durch das Eingelenk 4 definierte Drehachse nach oben verschwenkt. Dabei wurde das Befestigungsteil 9 durch die Verriegelung der hier nicht gezeigten Vorderseite der Fronthaube 50, welche mit dem Befestigungsteil 9 fest verbunden ist, gegenüber dem Basisteil 10 um die durch das Eingelenk 11 definierte Drehachse nach oben verschwenkt. Dabei wurde der Kulissenstein 12 durch die Führungskulisse 13 verfahren, so dass der Kulissenstein nun an dem unteren Ende der Führungskulisse 13 angeschlagen ist. Dadurch wird eine weitere Verlagerung des Basisteils 10 bzw. die hierdurch verursachte Aufstellbewegung der Aufstellanordnung begrenzt.

Fig. 4 zeigt aus einer vergrößerten Einzelansicht das Riegelglied 7 aus Fig. 1 bis 3. In dieser Ansicht ist der bolzenartige Aufbau des Riegelglieds 7 zu erkennen, wobei neben dem Exzenter 7a, dem Zwischenabschnitt 7b und dem Antriebsabschnitt 7c auch ein scheibenförmiger Abschnitt 7d zu erkennen ist, der an der dem Zwischenabschnitt 7b abgewandten Seite des Exzenters 7a angrenzt. Der Abschnitt 7d weist dabei den größten Außenumfang des Riegelgliedes 7 auf und dient bei der Befestigung des Riegelglieds 7 an dem Befestigungsteil 9 als Widerlager bzw. Setzkopf einer Niet. Das dem Antriebsabschnitt 7c gegenüberliegende Ende des Riegelgliedes 7 wird durch einen konzentrisch zu der Drehachse x verlaufenden Bolzenabschnitt 7e gebildet. Dieser dient in dem hier gezeigten Ausführungsbeispiel als Nietschaft einer Niet, um das Riegelglied nach der durch Drehung um die Drehachse x vorgenommene Justierung drehfest durch Vernietung an dem Befestigungsteil 9 zu befestigen, indem der Nietschaft in üblicher Weise zu einem Schließkopf umgeformt wird.

Die Erfindung funktioniert nun wie folgt: Der endseitige Bolzenabschnitt 7e des Riegelglieds 7 aus Fig. 4 wird in die entsprechende Aussparung in dem Gelenkabschnitt 9a des Befestigungsteils 9 eingesetzt, wobei das Riegelglied 7 zunächst nur durch Reibungskräfte gegen eine Drehung um die Achse x gesichert ist. Anschließend wird getestet, ob insbesondere eine sichere Verriegelung durch das Umgreifen des Riegelgliedes 7 in dem Exzenterabschnitt 7a durch die als Haken ausgebildete Riegelfalle 8 durch die Längentoleranzen des Basisteils 10 und des Befestigungsteils vorliegt oder nicht. Ist dies nicht der Fall, wird das Riegelglied 7 durch ein Antriebsmittel, beispielsweise ein Schraubenschlüssel, so weit um die Drehachse x gedreht, bis die Längentoleranzen über den Exzenter 7a wieder ausgeglichen sind und die sichere Verriegelung als auch Entriegelung vorliegt.

In dem vorstehend gezeigten Ausführungsbeispiel ist nur ein Teilabschnitt des Riegelgliedes 7 als Exzenter 7a ausgebildet, welcher sich zumindest axial über den Bereich des Riegelgliedes 7 erstreckt, der durch die Riegelfalle 8 umgriffen wird. Es versteht sich, dass der Exzenter auch einen deutlich größeren axialen Bereich des Riegelgliedes 7 bilden kann und sogar den Zwischenabschnitt 7b und den Antriebsabschnitt 7c ersetzen kann. In diesem Fall muss das Antriebsmittel entsprechend auf die Kontur des Exzenters angepasst werden.

In dem vorstehend gezeigten Ausführungsbeispiel weist der Exzenter 7a eine Außenkontur auf, welche an jeder Stelle einen größeren bzw. gleich großen Außenradius aufweist als der angrenzende Zwischenabschnitt 7b. Es versteht sich, dass der Exzenter auch zumindest abschnittsweise einen kleineren Außenradius als der angrenzende Zwischenabschnitt 7b aufweisen kann.

In dem vorstehend gezeigten Ausführungsbeispiel wird das Riegelglied durch Vernieten an dem Befestigungsteil 9 verbunden. Es versteht sich, dass die Befestigung auch durch Verschrauben durch eine in dem Bolzenabschnitt 7e vorgesehene Bohrung oder stoffschlüssig durch beispielsweise Verkleben oder Verschweißen vorgesehen sein kann.

In dem vorstehend gezeigten Ausführungsbeispiel ist die Aufstellanordnung 5 an derjenigen Befestigungseinheit angeordnet, welche an der Fahrzeugklappe 50 befestigt ist. Es versteht sich jedoch, dass die Aufstellanordnung auch an der an der Fahrzeugkarosserie befestigten Befestigungseinheit angeordnet sein kann.

In dem vorstehend gezeigten Ausführungsbeispiel wird die Aufstellbewegung der Aufstellanordnung durch einen einzigen Aktuator ausgelöst, wobei die Aufstellanordnung nach der Verriegelung dadurch in die aufgestellte Position gebracht wird, dass das Basisteil 10 durch den Aktuator gegenüber der zweiten Befestigungseinheit 3 um das Eingelenk 4 nach oben verschwenkt wird und durch die Kopplung zwischen dem gelenkig mit dem Basisteil verbundenen Befestigungsteil und der Fahrzeugkarosserie über die Fahrzeugklappe eine Verschwenkung des Befestigungsteils 9 gegenüber dem Basisteils 10 in Aufstellrichtung bewirkt wird. Es versteht sich jedoch, dass auch zwei Aktuatoren vorgesehen sein können, wobei der erste Aktuator die Entriegelung der Aufstellanordnung und der zweite Aktuator die nachfolgende Aufstellbewegung bewirkt.

In dem vorstehend gezeigten Ausführungsbeispiel wurde die Justierung der Verriegelungsvorrichtung 6 über das Drehen des Riegelglieds 7 realisiert. Es versteht sich, dass aufgrund der während des verriegelten Zustandes der Fahrzeugklappe bestehenden Wirkverbindung beider Befestigungseinheiten zu der Karosserie ebenfalls die Justierung des gesamten Klappenscharniers durch Drehen des Riegelgliedes erfolgt.

## Patentansprüche

1. Aufstellbares Klappenscharnier, umfassend
eine an einem von Fahrzeugklappe (50) und Fahrzeugkarosserieteil (51) befestigbare erste Befestigungseinheit (2),
eine an dem anderen von Fahrzeugklappe (50) und Fahrzeugkarosserieteil (51) befestigbare zweite Befestigungseinheit (3),
eine die erste Befestigungseinheit (2) mit der zweiten Befestigungseinheit (3) gelenkig verbindende Gelenkanordnung (4), wobei zumindest eine von der ersten Befestigungseinheit (2) und der zweiten Befestigungseinheit (3) eine Aufstellanordnung (5) umfasst, wobei die Aufstellanordnung (5) eine Verrieglungsanordnung (6) aufweist, die die Aufstellanordnung (5) lösbar verriegelt,
wobei die Verriegelungsanordnung (6) ein Riegelglied (7) und eine Riegelfalle (8) umfasst,
**dadurch gekennzeichnet,**
**dass** das Riegelglied (7) einen Exzenter (7a) umfasst, dass der Exzenter (7a) entlang eines Teils seines Umfangs von der Riegelfalle (8) umgreifbar ist, und dass das Riegelglied (7) einen Antriebsabschnitt (7c) umfasst, wobei an dem Antriebsabschnitt (7c) ein Antriebsmittel zur Drehung des Riegelgliedes (7) lösbar koppelbar ist, wobei der Antriebsabschnitt (7c) einen polygonförmigen oder ellipsoiden Querschnitt aufweist.

2. Aufstellbares Klappenscharnier nach Anspruch 1, **dadurch gekennzeichnet, dass** das Riegelglied (7) drehbar um eine Achse (x) ausgebildet ist.

3. Aufstellbares Klappenscharnier nach Anspruch 2, **dadurch gekennzeichnet, dass** die Achse (x), um welche das Riegelglied (7) drehbar ist, parallel zu der axialen Erstreckung des Exzenters (7a) verläuft.

4. Aufstellbares Klappenscharnier nach Anspruch 3, **dadurch gekennzeichnet, dass** der Antriebsabschnitt (7c), der einen polygonförmigen Querschnitt aufweist, als Sechskant ausgebildet ist..

5. Aufstellbares Klappenscharnier nach einem der vorhergehenden Ansprüche, **dadurch gekennzeichnet, dass** der Antriebsabschnitt (7c) einen stirnseitigen Endabschnitt des Riegelgliedes (6) bildet.

6. Aufstellbares Klappenscharnier einem der vorhergehenden Ansprüche, **dadurch gekennzeichnet, dass** die eine, die Aufstellanordnung umfassende Befestigungseinheit (2) ein Befestigungsteil (9) umfasst, das an einem von Fahrzeugklappe (50) und Fahrzeugkarosserieteil (51) befestigbar ist.

7. Aufstellbares Klappenscharnier nach Anspruch 6, **dadurch gekennzeichnet, dass** die eine, die Aufstellanordnung (5) umfassende Befestigungseinheit (2) ein Basisteil (10) umfasst, das mit der Gelenkanordnung (4) verbunden ist, und dass eines von Basisteil (10) und der anderen Befestigungseinheit (3) einen Anschlag (10a) umfasst.

8. Aufstellbares Klappenscharnier nach Anspruch 7, **dadurch gekennzeichnet, dass** das Riegelglied (7) an einem von dem Befestigungsteil (9) und dem Basisteil (10) angeordnet ist.

9. Aufstellbares Klappenscharnier nach Anspruch 8, **dadurch gekennzeichnet, dass** die Riegelfalle (8) verschwenkbar an dem anderen von dem Befestigungsteil (9) und dem Basisteil (10) angeordnet ist.

10. Aufstellbares Klappenscharnier nach einem der Ansprüche 7 bis 9, **dadurch gekennzeichnet, dass** bei einer Aufstellbewegung des Befestigungsteils (9) gegenüber dem Basisteil (10) die eine, die Aufstellanordnung umfassende Befestigungseinheit (2) gegenüber der anderen Befestigungseinheit (3) über die Gelenkanordnung (4) verschwenkt wird.

## Claims

1. Erectable flap hinge, comprising
a first fastening unit (2) which is fastenable to one of a vehicle flap (50) and a vehicle body part (51),
a second fastening unit (3) which is fastenable to the other of the vehicle flap (50) and the vehicle body part (51),
a joint arrangement (4) connecting the first fastening unit (2) to the second fastening unit (3) in an articulated manner,
wherein at least one out of the first fastening unit (2) and the second fastening unit (3) comprises an erecting arrangement (5),
wherein the erecting arrangement (5) has a locking arrangement (6) which releasably locks the erecting arrangement (5),
wherein the locking arrangement (6) comprises a locking member (7) and a locking latch (8),
**characterized in**
**that** the locking member (7) comprises an eccentric (7a), that the eccentric (7a) can be grasped along part of its circumference by the locking latch (8), and that the locking member (7) comprises a drive portion (7c), wherein a drive means for rotating the locking member (7) can be coupled releasably to the drive portion (7c), wherein the drive portion (7c) has a polygonal or ellipsoid cross section.

2. Erectable flap hinge according to claim 1, **characterized in that** the locking member (7) is designed to be rotatable about an axis (x).

3. Erectable flap hinge according to claim 2, **characterized in that** the axis (x) about which the locking member (7) is rotatable runs parallel to the axial extent of the eccentric (7a).

4. Erectable flap hinge according to claim 3, **characterized in that** the drive portion (7c) which has a polygonal cross section is in the form of a hexagon.

5. Erectable flap hinge according to one of the preceding claims, **characterized in that** the drive portion (7c) forms an end side end portion of the locking member (6).

6. Erectable flap hinge one of the preceding claims, **characterized in that** the one fastening unit (2) comprising the erecting arrangement comprises a fastening part (9) which is fastenable to one of the vehicle flap (50) and the vehicle body part (51).

7. Erectable flap hinge according to claim 6, **characterized in that** the one fastening unit (2) comprising the erecting arrangement (5) comprises a base part (10) which is connected to the joint arrangement (4), and that one of the base part (10) and the other fastening unit (3) comprises a stop (10a).

8. Erectable flap hinge according to claim 7, **characterized in that** the locking member (7) is arranged on one of the fastening part (9) and the base part (10).

9. Erectable flap hinge according to claim 8, **characterized in that** the locking latch (8) is arranged pivotably on the other of the fastening part (9) and the base part (10).

10. Erectable flap hinge according to one of claims 7 to 9, **characterized in that**, during an erecting movement of the fastening part (9) in relation to the base part (10), the one fastening unit (2) comprising the erecting arrangement is pivoted in relation to the other fastening unit (3) via the joint arrangement (4).

## Revendications

1. Charnière de capot relevable, comprenant
une première unité de fixation (2) qui peut être fixée à l'un parmi le capot de véhicule (50) et une partie de carrosserie de véhicule (51),
une deuxième unité de fixation (3) qui peut être fixée à l'autre parmi le capot de véhicule (50) et la partie de carrosserie de véhicule (51),
un dispositif d'articulation (4) qui relie la première unité de fixation (2) à la deuxième unité de fixation (3) de manière articulée,
l'une au moins parmi la première unité de fixation (2) et la deuxième unité de fixation (3) comprenant un dispositif de relevage (5),
le dispositif de relevage (5) comprenant un dispositif de verrouillage (6) qui verrouille de manière amovible le dispositif de relevage (5),
le dispositif de verrouillage (6) comprenant un élément de verrouillage (7) et un loquet de verrouillage (8),
**caractérisée en ce**
**que** l'élément de verrouillage (7) comprend un excentrique (7a), que l'excentrique (7a) peut être enserré par le loquet de verrouillage (8) sur une partie de sa circonférence, et que l'élément de verrouillage (7) comprend une portion d'entraînement (7c), un moyen d'entraînement pouvant être accouplé de manière amovible à la portion d'entraînement (7c) pour faire tourner l'élément de verrouillage (7), la section d'entraînement (7c) ayant une section transversale polygonale ou ellipsoïdale.

2. Charnière de capot relevable selon la revendication 1, **caractérisée en ce que** l'élément de verrouillage (7) est conçu de manière à pouvoir tourner sur un axe (x).

3. Charnière de capot relevable selon la revendication 2, **caractérisée en ce que** l'axe (x), autour duquel l'élément de verrouillage (7) peut tourner, est parallèle à l'extension axiale de l'excentrique (7a).

4. Charnière de capot relevable selon la revendication 3, **caractérisée en ce que** la portion d'entraînement (7c), qui a une section transversale polygonale, est conçu pour être hexagonale.

5. Charnière de capot relevable selon l'une des revendications précédentes, **caractérisée en ce que** la portion d'entraînement (7c) forme une portion d'extrémité côté frontal de l'élément de verrouillage (6).

6. Charnière de capot relevable selon l'une des revendications précédentes, **caractérisée en ce que** l'unité de fixation (2) comprenant le dispositif de relevage comprend une partie de fixation (9) qui peut être fixée à l'un parmi le capot de véhicule (50) et l'élément de carrosserie de véhicule (51).

7. Charnière de capot relevable selon la revendication 6, **caractérisée en ce que** l'unité de fixation (2) comprenant le dispositif de relevage comprend une partie de base (10) qui est reliée au dispositif d'articulation (4) et que l'un parmi la partie de base (10) et l'autre unité de fixation (3) comprend une butée (10a).

8. Charnière de capot relevable selon la revendication 7, **caractérisée en ce que** l'élément de verrouillage (7) est disposé au niveau de l'une parmi la partie de fixation (9) et la partie de base (10).

9. Charnière de capot relevable selon la revendication 8, **caractérisée en ce que** le loquet de verrouillage (8) est disposé de manière pivotante au niveau de l'autre parmi la partie de fixation (9) et la partie de base (10).

10. Charnière de capot relevable selon l'une des revendications 7 à 9, **caractérisée en ce que**, lorsque la partie de fixation (9) est remontée par rapport à la partie de base (10), l'unité de fixation (2), qui comprend le dispositif de relevage, est amenée à pivoter par rapport à l'autre unité de fixation (3) par le biais du dispositif de relevage (4).
